# EUROPÄISCHE PATENTSCHRIFT

(11) **EP 1 111 835 B1**
(45) Veröffentlichungstag und Bekanntmachung des Hinweises auf die Patenterteilung: **04.06.2008**
(21) Anmeldenummer: 00204470.9
(22) Anmeldetag: 12.12.2000
(51) Int. Cl.: H04L 5/14

(54) **Synchrones TDD-System**
Synchronous time-division dupex system
Système synchrone de duplex par répartition dans le temps

(30) Priorität: 21.12.1999 DE 19961674
(43) Veröffentlichungstag der Anmeldung: 27.06.2001
(73) Patentinhaber: DSP Group Switzerland AG, 8045 Zürich (CH)
(72) Erfinder: Stobart, Christopher, 52064 Aachen (DE)
(74) Vertreter: Müller Fottner Steinecke

(56) Entgegenhaltungen:
- WO-A-97/07604
- GB-A- 2 287 612
- US-A- 5 737 325

## Beschreibung

Die Erfindung betrifft ein synchrones TDD (Time Division Duplex) System zum Übertragen von Sprache und/oder von Daten zwischen einer Mastereinheit und mindestens zwei der Mastereinheit zugeordneten Slaveeinheiten. Die Erfindung betrifft ebenso ein Verfahren für ein solches synchrones TDD System.

TDD Systeme zum Übertragen von Sprache und/oder von Daten sind aus der Praxis unter anderem für schnurlose Telefonsysteme bekannt, bei denen jeweils ein Handgerät als Slaveeinheit über eine Basiseinheit als Mastereinheit eine Verbindung zum Festnetz aufbauen kann. Bei TDD Systemen wird ein für Übertragungen in zwei Richtungen eingesetzter Frequenzkanal in Zeitschlitze eingeteilt, die abwechselnd für Übertragungen in eine der beiden Richtungen reserviert sind. Der Wechsel kann dabei entweder pro Zeitschlitz oder auch jeweils nach einer festgelegten Anzahl von Zeitschlitzen erfolgen. Diese Einteilung des genutzten Frequenzkanals ermöglicht stets nur eine einzige Verbindung zwischen einer Mastereinheit und einer Slaveeinheit.

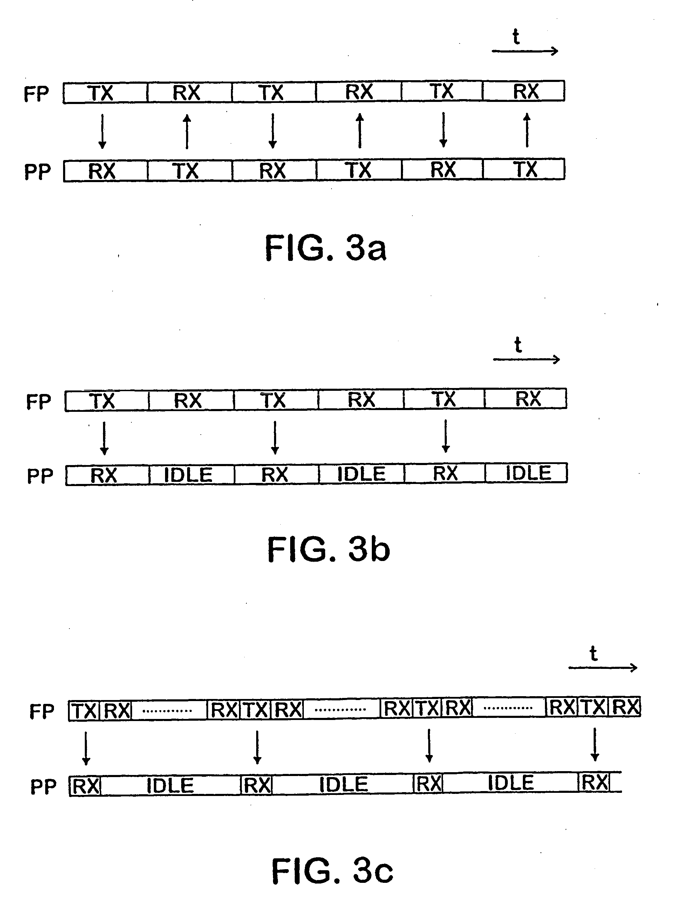

Figur 3a zeigt das Prinzip eines TDD Verfahrens, das für die Kommunikation zwischen einer Basisstation und einem Handgerät eingesetzt wird. In dem oberen Bereich der Figur ist das Verhalten der Basisstation FP über der Zeit t dargestellt und im unteren Bereich das Verhalten des Handgeräts PP über der Zeit t. Die Basisstation ist demnach entsprechend der Zeitschlitze abwechselnd auf Senden TX bzw. auf Empfangen RX geschaltet und das Handgeräte exakt entgegengesetzt auf Empfangen RX bzw. auf Senden TX. Mögliche Übertragungen erfolgen entsprechend dem Verhalten der Einheiten gemäß der eingezeichneten Pfeile. Anstelle einer einzigen in Zeitschlitze eingeteilten Frequenz können für die Übertragung auch mehrere Frequenzen eingesetzt werden, indem ein Frequenzsprung Spreizspektrum (FHSS) oder ein Direktsequenz Spreizspektrum (DSSS) verwendet wird.

Die Druckschrift WO 94/05101 beschreibt ein auf TDD basierendes, schnurloses Telefonsystem mit mindestens einer Basisstation und einer Mehrzahl von Handgeräten, bei dem die Basisstation mit den Handgeräten mittels eines Kommunikationsprotokolls unter Verwendung bestimmter Parameter kommuniziert. In der Druckschrift wird vorgeschlagen, dass für eine Kommunikation der einer Basisstation zugeordneten Handgeräte untereinander eines der Handgeräte die Parameter des Kommunikationsprotokolls nachahmt, um mit einem anderen Handgerät Kontakt aufnehmen zu können.

Es handelt sich bei dem in der WO 94/05101 beschriebenen System jedoch um ein asynchrones TDD System, d.h. im Ruhezustand werden weder von der Mastereinheit noch von den Slaveeinheiten Signale ausgesandt. Asynchrone Systeme weisen den Nachteil auf, dass sie im Standby-Betrieb aufgrund des erforderlichen regelmäßigen Scannens nach übertragenen Signalen eine hohen Energieverbrauch haben. Außerdem gestaltet sich der Aufbau einer Kommunikation relativ langsam, da vor jedem Verbindungsaufbau eine neue Synchronisierung zwischen den betroffenen Einheiten erforderlich ist.

Synchrone TDD Systeme vermeiden diese Nachteile dadurch, dass die Slaveeinheiten mit der Mastereinheit synchronisiert sind. Ein synchrones TDD System liegt beispielsweise der Nutzung des 902-928 MHz ISM Bandes zugrunde, das in den USA von der US Federal Communications Commission FCC industriellen, wissenschaftlichen und medizinischen Anwendungen zugeteilt wurde und in der FCC-Regulation Teil 15.247 festgelegt ist.

Bei synchronen Systemen sendet die Mastereinheit FP, wie in Figur 3b veranschaulicht, in den für die Übertragung von der Mastereinheit FP zu den Slaveeinheiten PP vorgesehenen Zeitschlitzen regelmäßig Synchronisierungssignale (Beacons) aus (oberer Teil der Figur). Die Übertragung kann dabei auch in Rahmen bestehend aus jeweils zwei Zeitschlitzen erfolgen. Die Slaveeinheiten PP empfangen diese Synchronisierungssignale (unterer Teil der Figur) und synchronisieren ihre Taktung entsprechend. In den gleichen Zeitschlitzen erfolgen auch die Anforderung für einen Verbindungsaufbau von der Mastereinheit an die entsprechende Slaveeinheit. Dadurch wird im Standby-Modus eine niedrige Aktivität der Empfänger der Slaveeinheiten und damit eine Reduzierung des Energieverbrauchs im Vergleich zu einem asynchronen System erzielt. Hinzu kommt, dass sich der Aufbau einer Verbindung schneller realisieren lässt als bei asynchronen Systemen, da die Eingangs-Synchronisierung bei jedem neuen Verbindungsaufbau entfällt.

Zur Minimierung des Energieverbrauchs in synchronen Systemen empfangen die Slaveeinheiten üblicherweise nicht jedes der von der Mastereinheit ausgesandten Synchronisierungssignale, sondern nur so viele wie erforderlich, um die Synchronisation aufrecht zu erhalten und benötigte Nachrichten von der Basisstation zu empfangen. Außerdem besteht die Möglichkeit, dass die Mastereinheit nicht in allen Zeitschlitzen bzw. Rahmen überträgt, damit systeminterne Interferenzen vermieden werden. Ein beispielhafter Ablauf einer solchen Übertragung von Synchronisierungssignalen ist schematisch in Figur 3c zu sehen.

Da in einem synchronen TDD System alle Slaveeiheiten auf den Empfang von Signalen von der Mastereinheit ausgerichtet sind, können die Slaveeinheiten allerdings nicht direkt miteinander kommunizieren. Eine Kommunikation der Slaveeinheiten untereinander über die Mastereinheit ist dagegen nicht möglich, da nur eine einzige Verbindung mit der Mastereinheit unterstützt wird.

Die US 5,737,325 A beschreibt ein Verbindungsverfahren für drahtlose Telefone, die eine direkte Kommunikation zwischen den Mobilstationen ermöglichen. Eine Basisstation sendet regelmäßig ein Steuersignal zu den Mobilstationen aus. Wenn eine Mobilstation eine Direktverbindung zu einer anderen Mobilstation aufbauen möchte, sendet sie ein Anforderungssignal an die Basisstation. Die Basisstation entscheidet, ob sie Zeitschlitze für die Anforderung bereitstellen kann. Wenn sie Zeitschlitze bereitstellen kann, wird die Verbindung von der einen Mobilstation zu der anderen Mobilstation über die Basisstation abgewickelt. Im Fall, dass die Basisstation keine Zeitschlitze zur Verfügung stellen kann, sendet sie ein Busy-Signal zur anfordernden Mobilstation zurück, welches im Steuersignal enthalten ist. Daraufhin sendet die anfordernde Mobilstation ein direktes Anforderungssignal auf einer von mehreren möglichen Frequenzkanälen an die anzurufende andere Mobilstation.

Die WO 97/07604 beschreibt ein Verfahren zur Synchronisation von Kommunikationsverbindungen in einem Mobilkommunikationssystem. Es wird ein synchrones FDD-System beschrieben. Eine Mobilstation wird in einem dualen Überwachungsmodus und in einem Energiesparmodus betrieben, um entweder über einen Direktmodekanal oder über einen Steuerkanal zu kommunizieren, wobei die Mobilstationen den Steuerkanal zwischen der Übertragung der Zeitschlitze im Direktmodekanal abhören kann, während es im Direktmodekanal kommuniziert.

Der Erfindung liegt deshalb die Aufgabe zugrunde, ein synchrones TDD System mit einer Mastereinheit und mindestens zwei der Mastereinheit zugeordneten Slaveeinheiten und ein Verfahren für ein solches System zur Verfügung zu stellen, die trotz einer regelmäßigen Übertragung von Synchronisierungssignalen (Beacons) von der Mastereinheit an die Slaveeinheiten eine direkte Kommunikation zwischen den Slaveeinheiten des gleichen Systems ermöglichen.

Die Aufgabe wird zum einen gelöst durch ein synchrones TDD System mit den Merkmalen des Anspruchs 1.

Zum anderen wird die Aufgabe gelöst durch das Verfahren aus Anspruch 8,

Mit dem erfindungsgemäßen System und dem erfindungsgemäßen Verfahren wird die Möglichkeit einer Kommunikation zwischen zwei Slaveeinheiten eines synchronen TDD Systems geschaffen, während gleichzeitig die Vorteile eines synchronen Systems gegenüber asynchronen Systemen gewahrt werden. Eine Anwendung in bestehenden Systemen kann zudem ohne die Notwendigkeit von Hardwaremodifikationen erfolgen.

Bevorzugte Ausgestaltungen des erfindungsgemäßen Systems gehen aus den Unteransprüchen hervor.

Im folgenden wird die Erfindung anhand von Ausführungsbeispielen und unter Bezugnahme auf Zeichnungen näher erläutert. Dabei zeigt:
- Fig. 1a,1b:: die Prinzipdarstellung der Initiierung einer Übertragung zwischen zwei Handgeräten in einem erfindungsgemäßen System nach einer ersten Ausführungsform,
- Fig. 2:: die Prinzipdarstellung der Initiierung einer Übertragung in einer Ausführungsform für ein FHSS System,
- Fig. 3a:: die Übertragung in Zeitschlitzen in einem TDD System (Stand der Technik), und
- Fig. 3b,3c:: mögliche Ausführungsformen einer Übertragung von Synchronisierungssignalen in einem synchronen TDD System (Stand der Technik).

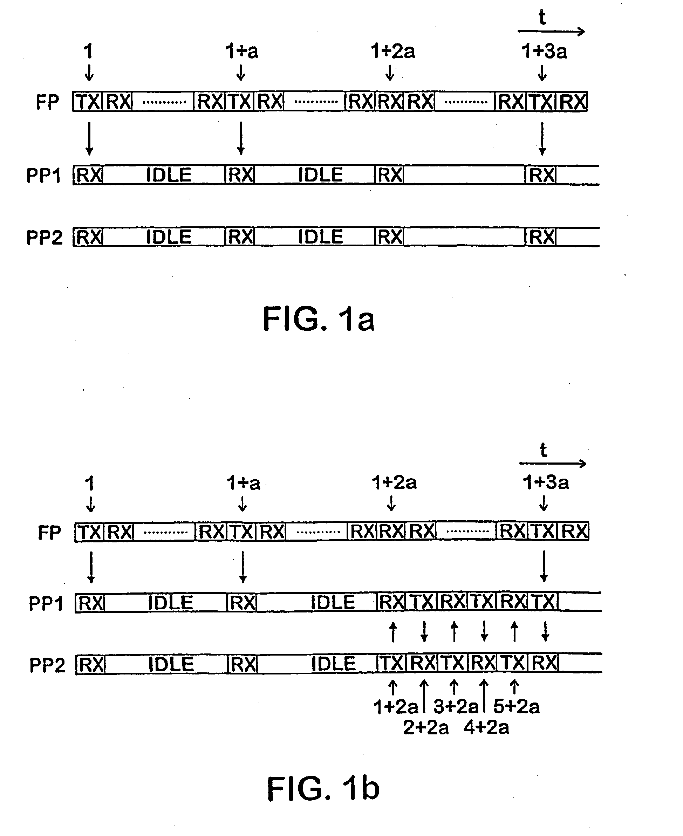

In den Figuren 1a und 1b wird das Prinzip des erfindungsgemäßen synchronen TDD-Systems und des erfindungsgemäßen Verfahrens veranschaulicht. Als System wird beispielhaft ein schnurloses Telefonsystem mit synchronem TDD zugrundegelegt, das als Mastereinheit eine Basisstation FP und als Slaveeinheiten mindestens zwei Handgeräte PP1,PP2 umfasst. Die Handgeräte PP1,PP2 können dabei über die Basisstation sowie über das Festnetz mit anderen Endgeräten, beispielsweise mit anderen Basisstationen zugeordneten Handgeräten, kommunizieren. Die Signalübertragung selber kann auf unterschiedliche Weise erfolgen. So können die Übertragungen unter Verwendung einer bestimmten Frequenz erfolgen, ebenso aber unter Verwendung mehrerer Frequenzen, beispielsweise durch Einsatz eines Frequenzsprung-Spreizsprektrums (FHSS) oder eines Direktsequenz-Spreizsprektrums (DSSS).

Wie bereits in den zum Stand der Technik beschriebenen Figuren 3a-3c ist auch in den Figuren 1a und 1b im oberen Bereich das Verhalten der Basisstation FP über der Zeit t aufgetragen. In der Mitte und im unteren Bereich ist das Verhalten von zwei Handgeräten PP1 bzw. PP2, zwischen denen eine Kommunikation aufgebaut werden soll, dargestellt. Die in Zeitschlitze aufgeteilte Übertragungsfrequenz ist prinzipiell abwechselnd einem Übertragen von Signalen von der Basisstation FP zu den Handgeräten PP1,PP2 und einem Übertragen von Signalen von den Handgeräten PP1,PP2 zu der Basisstation FP zugeteilt, indem die Basisstation FP und die Handgeräte PP1,PP2 alternierend und entgegengesetzt auf Senden TX und Empfangen RX bzw. auf Empfangen RX und Senden TX geschaltet sind.

Die Zeitschlitze werden aber im Ruhezustand nicht durchgehend für Übertragungen genutzt. So werden die Handgeräten PP1, PP2 im Ruhezustand zu keiner Zeit auf Senden TX geschaltet, und auch die Basisstation FP sendet nur in regelmäßigen Abständen a in einem dafür vorgesehenen Zeitschlitz 1, 1+a, 1+2a, 1+3a etc. Synchronisierungssignale für die Handgeräte PP1, PP2 aus. Die Handgeräte PP1, PP2 sind in diesen Zeitschlitzen empfangsbereit RX, dazwischen jedoch zur Energieeinsparung völlig inaktiv IDLE.

Nach jeweils zwei Übertragungen von Synchronisierungssignalen von der Basisstation FP zu den Handgeräten PP1, PP2 findet entsprechend der Darstellung in Figur 1a in Zeitschlitz 1+2a die eigentlich regelmäßige Übertragung eines Synchronisierungssignals nicht statt, obwohl die Handgeräte PP1, PP2 weiterhin in dem entsprechenden Zeitschlitz 2a+1 auf Empfang geschaltet sind. Zu diesem Zweck kann das Senden der Basisstation FP in dem entsprechenden Zeitschlitz 1+2a unterbunden werden, beispielsweise, indem die Basisstation einfach auf Empfang RX anstelle auf Senden TX geschaltet wird. Alternativ werden die Handgeräte PP1, PP2 auf Empfang mit einer von der Sendefrequenz verschiedenen Frequenz oder einem von dem Sendecode verschiedenen Empfangscode eines für die Übertragung verwendeten Frequenzsprung-Spreizspektrums (FHSS) oder eines Direktsequenz-Spreizspektrums (DSSS) geschaltet, falls in dem Telefonsystem für die Übertragungen ein FHSS oder ein DSSS Verfahren eingesetzt wird. Das Verhindern eines Empfangs in den Handgeräten PP1, PP2 anstelle des Sendens in der Basisstation FP entsprechend der alternativen Möglichkeiten kann vor allem dann von Vorteil sein, wenn die Basisstation FP zu der betroffenen Zeit eine aktive Verbindung mit einem der Handgerät des Systems unterhält, da in dieser Verbindung Daten verloren gehen können, wenn das Senden ausgesetzt wird.

Will nun ein Handgerät PP2 eine Verbindung zu einem anderen Handgerät PP1 des Systems aufbauen, so kann es eine eigene Übertragung mit der entsprechenden Frequenz und/oder DSSS-Code in den freien Zeitschlitz 1+2a einfügen, in dem das andere Handgerät PP1 empfangsbereit ist, aber von der Basisstation FP kein Synchronisierungssignal empfangen kann.

Wie in Figur 1b zu sehen, empfängt das Handgerät PP1 die Übertragung des Handgeräts PP2, woraufhin eine normale TDD-Verbindung in den Zeitschlitzen 1+2a,2+2a, etc. zwischen den zwei Handgeräten PP1,PP2 aufgebaut werden kann, bei der sich das initiierende Handgerät PP2 wie eine Basisstation verhält. Wurde die Verbindung zwischen der Basisstation FP und dem Handgerät PP1 durch ein Aussetzten des Sendens der Basisstation FP unterbrochen, so sollte, sobald die Verbindung zwischen den Handgeräten PP1, PP2 hergestellt ist, eine Frequenzänderung oder eine Änderung des FHS- oder DSSS-Codes erfolgen. Auf diese Weise werden Interferenzen mit der "echten" Basisstation FP und anderen Handgeräten in dem System vermieden, da einerseits die Basisstation FP für die anderen Handgeräte weiterhin Synchronisierungssignale aussenden muss und andererseits andere Handgeräte Verbindungen untereinander aufbauen wollen können.

Dadurch, dass sich für die Verbindung zwischen den Handgeräten PP1, PP2 eines der Handgeräte PP2 wie eine Basisstation verhält und die Verbindung der Handgeräte PP1, PP2 zu der "echten" Basisstation PP unterbrochen ist, empfängt nun keines der beiden betroffenen Handgeräte PP1, PP2 Synchronisierungssignale von der Basisstation FP mehr. Das bedeutet, dass die Taktung der Handgeräte PP1, PP2 allmählich von der Taktung der Basisstation FP abweichen wird, so dass nach der Beendigung der Verbindung der beiden Handgeräte PP1, PP2 untereinander eine neue Synchronisierung mit der Basisstation FP erforderlich wird. Hierdurch wird aber nicht mehr Zeit und Energie beansprucht als für die Initialisierungsphasen in Systemen ohne regelmäßiges Synchronisierungssignal. Die Leistungsfähigkeit ist also nicht schlechter als in asynchronen Systemen, wobei hinzu kommt, dass in dem erfindungsgemäßen System eine Resynchronisierung immer nur kurz nach der Freigabe einer Verbindung zwischen zwei Handgeräten erfolgen muss und nicht, wie bei asynchronen TDD System, beim Aufbau jeder regulären Verbindung zwischen der Basisstation und einem Handgerät.

Falls erforderlich, kann aber sogar während einer Verbindung zwischen zwei Handgeräten PP1, PP2 die Übermittlung von Synchronisierungssignale von der Basisstation FP an die Handgeräte PP1, PP2 fortgeführt werden. Hierzu können zum einen die Daten zwischen den Handgeräten PP1, PP2 mit einer etwas höheren Datenrate als erforderlich übertragen werden, so dass in jedem n-ten Rahmen ein Zeitschlitz für die Übersendung des Synchronisationssignals von der Basisstation FP an die Handgeräte PP1, PP2 verwendet werden kann. Zum anderen ist es möglich, die Kenntnis über den Inhalt der Zeitschlitze (z.B. VOX) auszunutzen, der von dem anderen Handgerät empfangen wurde, um zu bestimmen, ob sie überhaupt erforderlich sind, und wenn nicht, um die Zeitschlitze zur Resynchronisierung mit der Basisstation FP zu verwenden.

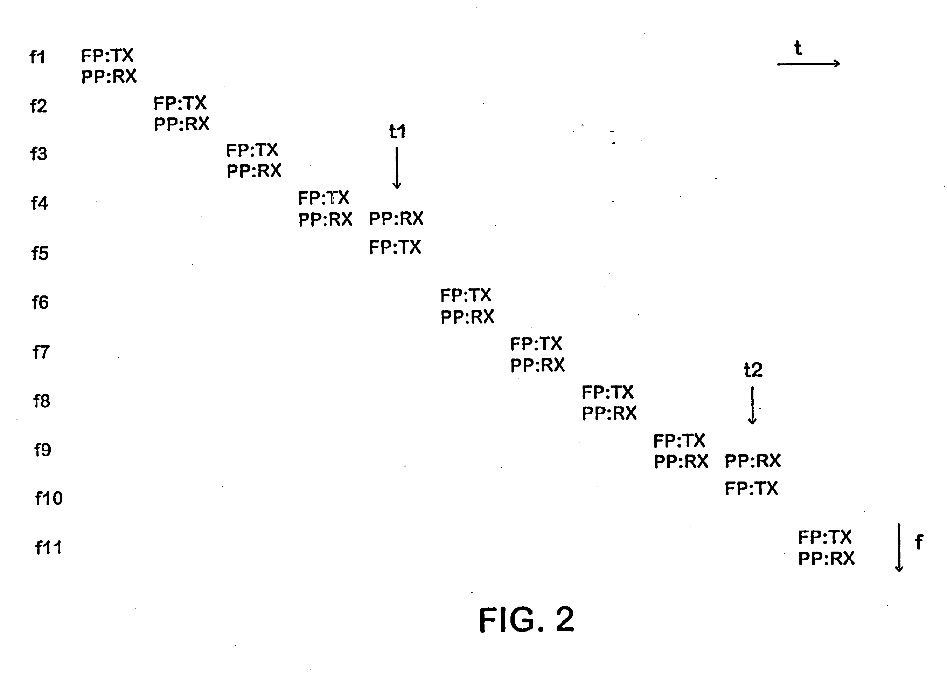

In Figur 2 wird die Funktionsweise eines Ausführungsbeispiels eines erfindungsgemäßen Systems verdeutlicht, das auf einem FHSS-System im 902-928 MHz ISM-Band basiert. Für ein solches System wird aufgrund der FCC Vorschriften für dieses Band sowie aufgrund der potentiellen Interferenzprobleme vorzugsweise ein TDD System anstelle eines TDMA Systems eingesetzt. Das hier betrachtete System soll ein synchrones TDD System sein, das für die Synchronisierung der Handgeräte PP mit der Basisstation FP Synchronisierungssignale einsetzt.

Das Frequenzsprung-Verfahren umfasst für die Übertragungen normalerweise 64 Frequenzen, wobei die Frequenz für jeden zu übertragenden Rahmen und damit für jeden zweiten Zeitschlitz gewechselt wird. Das Handgerät PP ist so programmiert, dass es alle 65 Rahmen "aufwacht", um ein Synchronisierungssignal von der Basisstation FP zu empfangen und seine Taktung an die der Basisstation FP anzupassen. In jedem Wake-up Rahmen ist die verwendete Frequenz also um eins erhöht (65 modulo 64 = 1). Die ersten 11 dieser verwendeten Frequenzen f1 -f11 sind am linken Bildrand in Figur 2 aufgelistet. Nach rechts hin ist das Verhalten der Basisstation FP und eines Handgeräts PP für jede Frequenz f über der Zeit t aufgetragen. Dabei bedeutet TX wie in den übrigen Figuren, dass eine Einheit sendet, hier ausschließlich dargestellt für die Basisstation FP, und RX, dass eine Einheit empfangsbereit ist, hier ausschließlich dargestellt für das Handgerät PP.

In jedem fünften Rahmen wird eine Übermittlung des Synchronisierungssignals von der Basisstation FP an das Handgerät PP verhindert, indem das Handgerät PP weiterhin auf der für den vorangehenden Rahmen verwendeten Frequenz f4 bzw. f9 empfängt, die Basisstation FP aber bereits auf der nächsten Frequenz f5 bzw. f10 sendet.

Das Handgerät PP ist somit zu bestimmten Zeiten t1, t2 in der Lage, eine Verbindung mit einem anderen Handgerät unter Verwendung der vorangehenden Frequenz aufzubauen.

Voraussetzung für diese Vorgehensweise ist, dass die Handgeräte PP eine ausreichende Taktstabilität haben, um eine Periode ohne neues Synchronisierungssignal von der Basisstation FP zu laufen. Sollte dies nicht der Fall sein, so kann auch ein zusätzlicher Empfangsrahmen für die Handgeräte PP an einer Stelle zwischen zwei erforderliche Übertragungen von der Basisstation FP eingeschoben werden, da zwischen jeder Übertragung eines Synchronisationssignals 64 nicht benötigte Rahmen vorhanden sind. Die Kommunikation zwischen zwei Handgeräten kann dann jeweils ab diesem zusätzlichen Empfangsrahmen innerhalb der 64 nicht genutzten Rahmen stattfinden.

## Patentansprüche

1. Synchrones TDD System zum Übertragen von Sprache und/oder Daten zwischen einer Mastereinheit (FP) und mindestens zwei der Mastereinheit (FP) zugeordneten Slaveeinheiten (PP1,PP2), wobei die Mastereinheit (FP) Sendemittel aufweist zum Aussenden von Steuersignalen in festgelegten Zeitschlitzen und die Slaveeinheiten (PP1,PP2) jeweils Empfangsmittel aufweisen zum Empfangen und Verarbeiten der von der Mastereinheit ausgesandten Steuerisignale, die Empfangsmittel der Slaveeinheiten (PP1,PP2) derart konfiguriert sind, dass sie in festgelegten Zeitschlitzen, die nicht für eine Übertragung von Steuersignalen genutzt werden, empfangsbereit sind bzw. dass sie in festgelegten Zeitschlitzen mit einer Einstellung empfangsbereit sind, die einen Empfang von Signalen von der Mastereinheit (FP) nicht ermöglicht, wobei die Slaveeinheiten (PP1,PP2) Sendemittel aufweisen, die geeignet sind, einen der Zeitschlitze mit empfangsbereiten Empfangsmitteln der Slaveeinheiten (PP1,PP2) aber ohne ermöglichten Empfang von Signalen von der Mastereinheit (FP) zu nutzen, um Signale für die Initiierung einer Kommunikation untereinander zu übertragen, **dadurch gekennzeichnet dass** die Mastereinheit (FP) so konfiguriert ist, dass ihr Sendemittel in regelmässigen Abständen (a) ein Synchronisationssignal auf einem ersten Kanal aussendet und die Empfangsmittel der Slaveeinheiten (PP1,PP2) so konfiguriert sind, dass sie nach einer festgelegten Periode eines Vielfachen der Abstände (a) für das Synchronisationssignals ihre Emfangsbereitbereitschaft für das Synchronisationssignal deaktivieren und zu diesen Zeitpunkten, an denen die Empfangsbereitschaft für das Synchronisationssignal deaktiviert ist, ein Signal zur Initiierung einer Kommunikation mit einer anderen Slaveeinheit (PP1,PP2) der gleichen Mastereinheit (FP) auf einem zweiten Kanal aussenden oder für den Empfang des Signals zur Initiierung einer Kommunikation mit einer anderen Slaveeinheit (PP1,PP2) der gleichen Mastereinheit (FP) auf einem zweiten Kanal empfangsbereit sind.

2. Synchrones TDD System nach Anspruch 1,
**dadurch gekennzeichnet,**
**dass** die Slaveeinheiten (PP) so konfiguriert sind, dass sie in festgelegten Abständen während eines Zeitschlitzes, der von der Mastereinheit (FP) zur Übertragung von Synchronisierungssignalen verwendet wird, empfangsbereit für eine andere Frequenz als die von der Mastereinheit (FP) genutzten Frequenz geschaltet ist.

3. Synchrones TDD System nach Anspruch 1,
**dadurch gekennzeichnet,**
**dass** die Sendemittel der Mastereinheit (FP) so konfiguriert sind, dass sie zur Übertragung der Synchronisierungssignale einen FHSS (Frequency Hopping Spread Spectrum) Code einsetzten und dass die Empfangsmittel der Slaveeinheiten (PP) so konfiguriert sind, dass sie normalerweise mit dem gleichen FHSS Code empfangen, in festgelegten Zeitschlitzen aber mit einem anderen FHSS Code, der zur Initiierung einer Kommunikation mit einer anderen Slaveeinheit (PP) nutzbar ist.

4. Synchrones TDD System nach Anspruch 1,
**dadurch gekennzeichnet,**
**dass** die Sendemittel der Mastereinheit (FP) so konfiguriert sind, dass sie zur Übertragung der Synchronisierungssignale einen DSSS (Direct Sequence Spread Spectrum) Code einsetzten und dass die Empfangsmittel der Slaveeinheiten (PP) so konfiguriert sind, dass sie normalerweise mit dem gleichen DSSS Code empfangen, in festgelegten Zeitschlitzen aber mit einem anderen DSSS Code, der zur Initiierung einer Kommunikation mit einer anderen Slaveeinheit (PP) nutzbar ist.

5. Synchrones TDD System nach einem der voranstehenden Ansprüche,
**dadurch gekennzeichnet,**
**dass** die Sende- und Empfangsmittel der Slaveeinheiten (PP1,PP2) geeignet sind, nach der Initiierung der Kommunikation untereinander eine normale TDD-Verbindung mit einer anderen Frequenz, oder einem anderen Code eines FHSS oder eines DSSS als der bzw. dem für die Übertragung des Synchronisierungssignals von der Mastereinheit (FP) eingesetzten Frequenz oder Code zu erstellen.

6. Synchrones TDD System nach einem der voranstehenden Ansprüche,
**dadurch gekennzeichnet,**
**dass** die Empfangsmittel der Slaveeinheiten (PP1,PP2) geeignet sind, während einer Kommunikation zwischen zwei Slaveeinheiten (PP1,PP2) in für diese Kommunikation nicht erforderlichen Zeitschlitzen weiterhin Synchronisierungssignale von der Mastereinheit (FP) zu empfangen.

7. Synchrones TDD System nach Anspruch 1,
**dadurch gekennzeichnet,**
**dass** das System ein schnurloses Kommunikationssystem, insbesondere ein 902-928 MHz ISM-Band System, ist und dass die Mastereinheit (FP) eine Basisstation und die Slavereinheiten (PP1,PP2) Handgeräte sind.

8. Verfahren für ein synchrones TDD System zum Übertragen von Sprache und/oder Daten zwischen einer Mastereinheit (FP) und mindestens zwei der Mastereinheit (FP) zugeordneten Slaveeinheiten (PP1,PP2), das die folgenden Schritte aufweist:
a) die Mastereinheit (FP) sendet in regelmäßigen Abständen (a,1+a) ein Steuersignal auf einem ersten Kanal aus, das von den Slaveeinheiten (PP1,PP2) empfangen wird,
**dadurch gekennzeichnet, dass:**
a-1) das Steuersignal ein Synchronisationssignal (Beacon) ist; und
a-2) die Empfangsbereitschaft in den Slaveeinheiten für das Synchronisationssignal nach einer festgelegten Periode, die einem Vielfachen der Abstände (a) entspricht, deaktiviert wird; und
b) die Slaveeinheiten (PP1,PP2) zu diesen festgelegten Zeitschlitzen (1+2a)die der festgelegten Periode entsprechen, auf empfangsbereit geschaltet werden, derart, dass ein Empfang von Signalen von der Mastereinheit nicht möglich ist;
c) wobei während eines solchen Zeitschlitzes (1+2a)zu dem der Empfang von Signalen der Mastereinheit deaktiviert ist ein Signal von einer Slaveeinheit (PP1,PP2) an andere Slaveeinheiten (PP1,PP2) auf einem zweiten Kanal ausgesendet wird, das von den anderen Slaveeinheiten (PP1,PP2) während dieses Zeitschlitzes (1+2a) empfangbar ist; oder
d) ein von einer ersten Slaveeinheit (PP1,PP2) gemäß Schritt c) ausgesandten Signals von einer zweiten Slaveeinheit (PP1,PP2) während des Zeitschlitzes (1+2a) aus Schritt b) auf einem zweiten Kanal empfangen wird;
e) Aufbauen einer direkten Kommunikation zwischen der ersten und der zweiten Slaveeinheit.

## Claims

1. A synchronous TDD system for the transmission of speech and/or data between a master unit (FP) and at least two slave units (PP1, PP2) which are assigned to the master unit (FP), the master unit (FP) including transmission means for transmitting control signals in fixed time slots and the slave units (PP1, PP2) including respective receiving means for receiving and processing the synchronization signals transmitted by the master unit, the receiving means of the slave units (PP1, PP2) being configured in such a manner that in fixed time slots which are not used for a transmission of synchronization signals they are ready to receive or that in fixed time slots they are ready to receive with a setting that does not allow the reception of signals from the master unit (FP), the slave units (PP1, PP2) including transmission means which are suitable for using one of the time slots in which the receiving means of the slave units (PP1, PP2) are ready to receive, but reception of signals from the master unit (FP) is not enabled, in order to transmit signals for initiating a communication among themselves, **characterized in that** the master unit (FP) is configured in such a manner that its transmission means transmit out a synchronization signal over a first channel at regular intervals (a) and the receiving means of the slave units (PP1, PP2) are configured in such a manner that they deactivate their ready-to-receive state for the synchronization signal after a defined period of a plurality of the intervals (a) and transmit over a second channel at the instants at which the ready-to-receive state for the synchronization signal is deactivated a signal for initiating a communication with another slave unit (PP1, PP2) of the same master unit (FP), or are ready to receive over a second channel the signal for initiating a communication with another slave unit (PP1, PP2) of the same master unit (FP).

2. A synchronous TDD system as claimed in claim 1, **characterized in that** the slave units (PP) are configured in such a manner that at fixed intervals during a time slot which is used for the transmission of synchronization signals by the master unit (FP) they are ready to receive at a frequency other than the frequency used by the master unit (FP).

3. A synchronous TDD system as claimed in claim 1, **characterized in that** the transmission means of the master unit (FP) are configured in such a manner that they utilize an FHSS (Frequency Hopping Spread Spectrum) code for the transmission of the synchronization signals and that the receiving means of the slave units (PP) are configured in such a manner that they normally receive with the same FHSS code, in fixed time slots, but with a different FHSS code which can be used to initiate a communication with another slave unit (PP).

4. A synchronous TDD system as claimed in claim 1, **characterized in that** the transmission means of the master unit (FP) are configured in such a manner that they utilize a DSSS (Direct Sequence Spread Spectrum) code for the transmission of the synchronization signals and that the receiving means of the slave units (PP) are configured in such a manner that they normally receive with the same DSSS code, but in fixed time slots with a different DSSS code which can be used to initiate a communication with another slave unit (PP).

5. A synchronous TDD system as claimed in any one of the preceding claims, **characterized in that** the transmission and receiving means of the slave units (PP1, PP2) are suitable for establishing a normal TDD connection among themselves after the initiation of the communication, with a TDD connection frequency or with a code of an FHSS or a DSSS other than the frequency or code used by the master unit (FP) for the transmission of the synchronization signal.

6. A synchronous TDD system as claimed in any one of the preceding claims, **characterized in that** the receiving means of the slave units (PP1, PP2) are suitable for continuing the reception of synchronization signals from the master unit (FP) during a communication between two slave units (PP1, PP2) in time slots which are not required for this communication.

7. A synchronous TDD system as claimed in claim 1, **characterized in that** the system is a cordless communication system, notably a 902-928 MHz ISM band system, and **in that** the master unit (FP) is a base station and the slave units (PP1, PP2) are handsets.

8. A method for a synchronous TDD system for the transmission of speech and/or data between a master unit (FP) and at least two slave units (PP1, PP2) which are assigned to the master unit (FP), which method includes the following steps:
a) the master unit (FP) transmits at regular intervals (a, 1+a) a control signal over a first channel, which signal is received by the slave units (PP1, PP2),
which method is **characterized in that**:
a-1) the control signal is a synchronization signal (beacon); and
a-2) the ready-to-receive state in the slave units for the synchronization signal is deactivated after a defined period which corresponds to a plurality of the intervals (a); and
b) the slave units (PP1, PP2) are switched to the ready-to-receive state in the defined time slots (1+2a) that correspond to the defined period, in such a manner that reception of signals from the master unit is not possible;
c) wherein during such a time slot (1+2a) in which the reception of signals from the master unit is deactivated a signal is transmitted from one slave unit (PP1, PP2) to other slave units (PP1, PP2) over a second channel, which signal can be received by the other slave units (PP1, PP2) during this time slot (1+2a); or
d) a signal transmitted by a first slave unit (PP1, PP2) in conformity with step c) is received over a second channel by a second slave unit (PP1, PP2) during the time slot (1+2a) in conformity with step b);
e) a direct communication is established between the first and the second slave unit.

## Revendications

1. Système de duplexage par répartition dans le temps synchrone destiné à transférer la voix et/ou les données entre une unité maître (FP) et au moins deux unités esclaves (PP1, PP2) associées à l'unité maître (FP), l'unité maître (FP) présentant des moyens d'émission pour émettre des signaux de commande dans des intervalles de temps déterminés et les unités esclaves (PP1, PP2) présentant respectivement des moyens de réception pour recevoir et traiter les signaux de commande émis par l'unité maître, les moyens de réception des unités esclaves (PP1, PP2) étant configurés de telle sorte qu'ils soient prêts à recevoir dans des intervalles de temps déterminés qui ne sont pas utilisés pour un transfert de signaux de commande ou qu'ils soient prêts à recevoir dans des intervalles de temps déterminés avec un réglage qui ne permet pas de recevoir de signaux par l'unité maître (FP), les unités esclaves (PP1, PP2) présentant des moyens d'émission qui sont appropriés afin d'utiliser l'un des intervalles de temps avec des moyens de réception des unités esclaves (PP1, PP2) prêts à recevoir mais sans réception possible de signaux par l'unité maître (FP), afin de transférer des signaux pour l'initiation d'une communication entre elles, **caractérisé en ce que** l'unité maître (FP) est configurée de telle sorte que son moyen d'émission émette à segments réguliers (a) un signal de synchronisation sur un premier canal et les moyens de réception des unités esclaves (PP1, PP2) sont configurés de telle sorte qu'ils désactivent après une période déterminée d'une multitude de segments (a) pour le signal de synchronisation son attente de réception pour le signal de synchronisation et à ces moments-là, où l'attente de réception pour le signal de synchronisation est désactivée, émettent un signal d'initiation d'une communication avec une autre unité esclave (PP1, PP2) de la même unité maître (FP) sur un second canal ou sont prêts à recevoir pour la réception du signal d'initiation d'une communication avec une autre unité esclave (PP1, PP2) de la même unité maître (FP) sur un second canal.

2. Système de duplexage par répartition dans le temps synchrone selon la revendication 1, **caractérisé en ce que** les unités esclaves (PP) sont configurées de telle sorte qu'elles soient montées à des segments déterminés pendant un intervalle de temps qui est utilisé par l'unité maître (FP) pour transférer des signaux de synchronisation, de manière à être prêtes à recevoir pour une autre fréquence que la fréquence utilisée par l'unité maître (FP).

3. Système de duplexage par répartition dans le temps synchrone selon la revendication 1, **caractérisé en ce que** les moyens d'émission de l'unité maître (FP) sont configurés de telle sorte qu'ils aient utilisé pour transférer les signaux de synchronisation un code FHSS (Frequency Hopping Spread Spectrum) et **en ce que** les moyens de réception des unités esclaves (PP) sont configurés de telle sorte qu'ils reçoivent normalement avec le même code FHSS dans des intervalles de temps déterminés mais avec un autre code FHSS qui peut être utilisé pour initier une communication avec une autre unité esclave (PP).

4. Système de duplexage par répartition dans le temps synchrone selon la revendication 1, **caractérisé en ce que** les moyens d'émission de l'unité esclave (FP) sont configurés de telle sorte qu'ils aient utilisé pour transférer les signaux de synchronisation un code DSSS (Direct Sequence Spread Spectrum) et **en ce que** les moyens de réception des unités esclaves (PP) sont configurés de telle sorte qu'ils reçoivent normalement avec le même code DSSS dans des intervalles de temps déterminés mais avec un autre code DSSS qui peut être utilisé pour initier une communication avec une autre unité esclave (PP).

5. Système de duplexage par répartition dans le temps synchrone selon l'une quelconque des revendications précédentes, **caractérisé en ce que** les moyens d'émission et de réception des unités esclaves (PP1, PP2) sont appropriés afin d'établir après l'initiation de la communication entre elles une liaison normale par duplexage par répartition dans le temps avec une autre fréquence ou un autre code d'un FHSS ou d'un DSSS qu'une fréquence ou un code utilisé pour le transfert du signal de synchronisation par l'unité maître (FP).

6. Système de duplexage par répartition dans le temps synchrone selon l'une quelconque des revendications précédentes, **caractérisé en ce que** les moyens de réception des unités esclaves (PP1, PP2) sont appropriés afin de recevoir pendant une communication entre deux unités esclaves (PP1, PP2) dans des intervalles de temps non nécessaires à cette communication, en outre des signaux de synchronisation par l'unité maître (FP).

7. Système de duplexage par répartition dans le temps synchrone selon la revendication 1, **caractérisé en ce que** le système est un système de communication sans fil, notamment un système à bande ISM 902-928 MHz et **en ce que** l'unité maître (FP) est une station de base et les unités esclaves (PP1, PP2) sont des appareils portatifs.

8. Procédé destiné à un système de duplexage par répartition dans le temps synchrone destiné à transférer la voix et/ou les données entre une unité maître (FP) et au moins deux unités esclaves (PP1, PP2) associées à l'unité maître (FP) qui présente les étapes suivantes :
a) l'unité maître (FP) émet à segments réguliers (a, 1+a) un signal de commande sur un premier canal qui est reçu par les unités esclaves (PP1, PP2), **caractérisé en ce que** :
a-1) le signal de commande est un signal de synchronisation (Beacon) ; et
a-2) l'attente de réception est désactivée dans les unités esclaves pour le signal de synchronisation après une période déterminée qui correspond à une multitude de segments (a) ; et
b) les unités esclaves (PP1, PP2) sont montées de manière à être prêtes à recevoir à ces intervalles de temps (1+2a) déterminés qui correspondent à la période déterminée de telle sorte qu'une réception de signaux par l'unité maître ne soit pas possible ;
c) pendant un tel intervalle de temps (1+2a), où la réception de signaux de l'unité maître est désactivée, un signal étant émis par une unité esclave (PP1, PP2) à d'autres unités esclaves (PP1, PP2) sur un second canal qui peut être reçu par les autres unités esclaves (PP1, PP2) pendant cet intervalle de temps (1+2a) ; ou
d) un signal émis par une première unité esclave (PP1, PP2) selon l'étape c) est reçu par une deuxième unité esclave (PP1, PP2) pendant l'intervalle de temps (1+2a) de l'étape b) sur un second canal ;
e) l'établissement d'une communication directe entre la première et la deuxième unité esclave.
